# FASCICULE DE BREVET EUROPEEN

(11) **EP 2 452 825 B1**
(45) Date de publication et mention de la délivrance du brevet: **05.08.2015**
(21) Numéro de dépôt: 11169402.2
(22) Date de dépôt: 10.06.2011
(51) Int. Cl.: B41M 5/26, B41M 3/14, B42D 25/00

(54) **Procédé de réalisation d'une empreinte sur un article**
Verfahren zur Umsetzung eines Prägedrucks auf einem Artikel
Method for making an imprint on an article

(30) Priorité: 11.06.2010 FR 1054641
(43) Date de publication de la demande: 16.05.2012
(73) Titulaire: Oberthur Technologies, 92300 Levallois-Perret (FR)
(72) Inventeur: Vere, Denis, 35370 ARGENTRE DU PLESSIS (FR); Barbotin, Aurélie, 35530 Noyal sur Vilaine (FR)
(74) Mandataire: Delumeau, François Guy

(56) Documents cités:
- US-A- 3 614 839
- US-A- 4 318 554
- US-A- 4 773 677
- US-A- 4 988 126
- US-A1- 2007 182 154
- US-B1- 6 322 655
- BORCH JENS ET AL.: "Handbook of Physical Testing of Paper", 2002, Marcel Dekker, Inc., New York, XP002619297, ISBN: 0-8247-0499-1 vol. 2, page 430, * page 430; tableau 4 *

## Description

La présente invention concerne le domaine technique des articles munis d'une empreinte représentant un motif prédéfini notamment pour leur identification ou leur authentification. Elle concerne ainsi un procédé de réalisation d'une empreinte représentant un motif prédéfini sur un article et un article comprenant une empreinte réalisée au moyen d'un tel procédé.

Elle s'applique plus précisément mais non exclusivement à la réalisation d'une empreinte sur un document de sécurité ou un document-valeur ou tout document dont l'authenticité nécessite d'être vérifiée. Elle s'applique de préférence aux articles à corps plats d'une épaisseur inférieure au millimètre, tels que par exemple les cartes à microcircuit.

Afin de lutter contre la contrefaçon, ces documents comprennent généralement une combinaison d'éléments de sécurité consistant par exemple en une composition particulière d'un matériau constituant un support du document, en un insert de sécurité incorporé dans le support (puce électronique, fil de sécurité, etc.), en un motif en relief ou imprimé sur le support, etc. Cette liste n'est bien entendu pas exhaustive.

Il est notamment connu de former une empreinte sur une carte à microcircuit décrivant un motif en relief. Ce motif en relief peut être formé par embossage au moyen d'une presse, par impression taille-douce ou éventuellement par traitement de surface au moyen d'un faisceau laser.

L'inconvénient de ces empreintes est qu'elles sont superficielles, et sont ainsi plus exposées à des dégradations volontaires dans le but de falsifier le document, par exemple par grattage. En outre, de telles empreintes superficielles, réalisées par embossage par exemple, sont relativement simples à reproduire.

L'invention a notamment pour but de proposer un procédé de réalisation d'une empreinte sur un article difficilement falsifiable tout en étant simple à réaliser.

US2007/0182154 divulgue une méthode pour la production d'un document de sécurité de type livre.

US3614839 divulgue une carte d'identité ayant une structure laminée.

US-A-4 773 677 divulgue un procédé de réalisation d'une empreinte représentant un motif prédéfini (24) sur un article (10) comprenant un corps réalisé dans un premier matériau à premier coefficient de dilatation thermique (C1).

Ce procédé comprend une étape d'incorporation dans le corps (10) d'une pièce (22) réalisée dans un deuxième matériau à deuxième coefficient de dilatation thermique (C2), inférieur au premier, une étape de chauffage de l'article (10) jusqu'à une température prédéfinie pour provoquer une dilatation des matériaux, puis une étape de refroidissement de l'article (10) pour provoquer un retrait des matériaux générant une contrainte mécanique à l'origine d'une déformation de l'article (10) étant conformée pour que la déformation générée corresponde au motif prédéfini (24), ladite empreinte formant un relief.

A cet effet, l'invention a pour objet un procédé de réalisation d'une empreinte représentant un motif prédéfini sur un article comprenant un corps réalisé dans un premier matériau à premier coefficient de dilatation thermique, **caractérisé en ce que,** le procédé comprend une étape d'incorporation dans le corps d'une pièce réalisée dans un deuxième matériau à deuxième coefficient de dilatation thermique, inférieur au premier coefficient, une étape de chauffage de l'article jusqu'à une température prédéfinie pour provoquer une dilatation des matériaux puis une étape de refroidissement de l'article pour provoquer un retrait des matériaux générant une contrainte mécanique à l'origine d'une déformation de l'article, la pièce étant conformée pour que la déformation générée corresponde au motif prédéfini.

Selon l'invention, l'empreinte forme un relief dont l'aspect est déterminé par un élément interne à l'article, à savoir la pièce. L'empreinte est ainsi complètement inhérente à la fabrication de l'article et est impossible à reproduire une fois l'article fabriqué.

La déformation liée à ces contraintes de dilation et de retrait mécaniques est caractérisée par un relief faiblement marqué et très difficile à reproduire une fois l'article fabriqué. En effet, pour créer cette empreinte, il faut incorporer une pièce dans le corps de l'article puis soumettre l'ensemble par exemple à un chauffage suivi d'un refroidissement.

Par « premier coefficient de dilatation thermique élevé » et « deuxième coefficient de dilatation thermique faible », on entend que la valeur du premier coefficient est supérieure à la valeur du deuxième coefficient.

De préférence, le premier matériau comprend essentiellement une matière plastique. L'avantage d'utiliser une matière plastique est qu'un tel matériau est facilement déformable.

Dans un mode de réalisation préféré, le deuxième matériau comprend essentiellement une matière métallique. En variante, le deuxième matériau comprend essentiellement une matière plastique.

Dans un mode de réalisation préféré, le deuxième matériau est un vernis et la pièce est formée par un film de vernis.

De préférence, à la température prédéfinie, le corps est dans un état lui permettant de s'écouler autour de la pièce. Ainsi, dans ce cas, les contraintes subies lors du retrait sont optimisées car la surface de contact entre la pièce et le corps est maximale.

Par exemple, la température prédéfinie correspond sensiblement à une température de changement d'état du premier matériau, par exemple une température de transition vitreuse.

Dans un mode de réalisation préféré, le corps comprend une nappe de fibres neutres et la pièce est déportée par rapport à cette nappe. Ainsi, les contraintes mécaniques subies par l'article lors de l'étape de refroidissement se répartissent inégalement de part et d'autre de la nappe ce qui permet de générer une déformation relativement prononcée.

Dans un mode de réalisation préféré, le corps est en forme générale d'une plaque délimitant des première et deuxième faces et le premier matériau est sensiblement homogène, la nappe de fibres neutres forme un plan localisé sensiblement au centre du corps.

Selon la revendication 1, le corps étant formé d'une pluralité de couches, pour incorporer la pièce, on intercale la pièce entre deux couches du corps. Ainsi, l'étape d'incorporation de la pièce est relativement facile à mettre en oeuvre du fait que l'article se présente initialement sous forme de plusieurs couches distinctes et séparées les unes des autres.

Dans un mode de réalisation préféré, le deuxième matériau étant un vernis, pour incorporer la pièce, on dépose le vernis sur une des couches du corps.

De préférence, lors de l'étape de chauffage, on soumet l'article à une pression prédéfinie afin de provoquer la lamination des couches du corps entre elles. Cette étape de lamination permet le fluage du premier matériau du corps de l'article autour de la pièce incorporée dans le corps.

De préférence, afin d'obtenir une déformation suffisamment importante, le coefficient du premier matériau est au moins deux fois plus élevé que le coefficient du deuxième matériau.

De préférence, l'empreinte est perceptible à l'oeil nu dans des conditions d'observations prédéfinies, par exemple en observation réflective rasante. Par exemple, l'empreinte est quasiment imperceptible en observation orthogonale au support.

De préférence, la pièce a la forme générale du motif prédéfini.

De préférence, l'empreinte est perceptible à l'oeil nu et est apte à être révélée par une observation en réflexion.

L'invention a encore pour objet un article comprenant un corps muni d'une empreinte, caractérisé en ce que l'empreinte est réalisée au moyen d'un procédé selon l'invention.

De préférence, l'article est une carte à microcircuit comprenant un circuit électronique apte à réaliser un ensemble d'opérations, dans lequel la pièce est isolée électriquement du circuit. Ainsi, la pièce est dépourvue de fonctions électroniques et est uniquement destinée pour produire une empreinte dans le corps de la carte.

Un procédé destiné à permettre l'authentification d'un article conforme à l'invention comprend une étape d'acquisition d'une image de ladite empreinte par un dispositif d'acquisition apte à mesurer un relief.

D'autres caractéristiques et avantages de l'invention apparaîtront à la lumière de la description qui suit, faite en référence aux dessins annexés dans lesquels :
- la figure 1 représente un article, tel qu'une carte à microcircuit muni d'une empreinte, imperceptible à l'oeil nu réalisée au moyen d'un procédé selon un premier mode de réalisation de l'invention ;
- la figure 2 représente la carte de la figure 1, dans lequel on révèle l'empreinte au moyen d'un dispositif optique ;
- la figure 3 est une vue en coupe transversale de la carte de la figure 1 selon la ligne 3-3 ;
- les figures 4 et 5 représentent des étapes du procédé de fabrication de la carte de la figure 1 ;
- la figure 6 est une vue en perspective de dessus de l'article de la figure 1 selon un deuxième mode de réalisation de l'invention ;
- la figure 7 et une vue en coupe de l'article de la figure 6 ;
- la figure 8 est une vue de dessous de l'article de la figure 6.

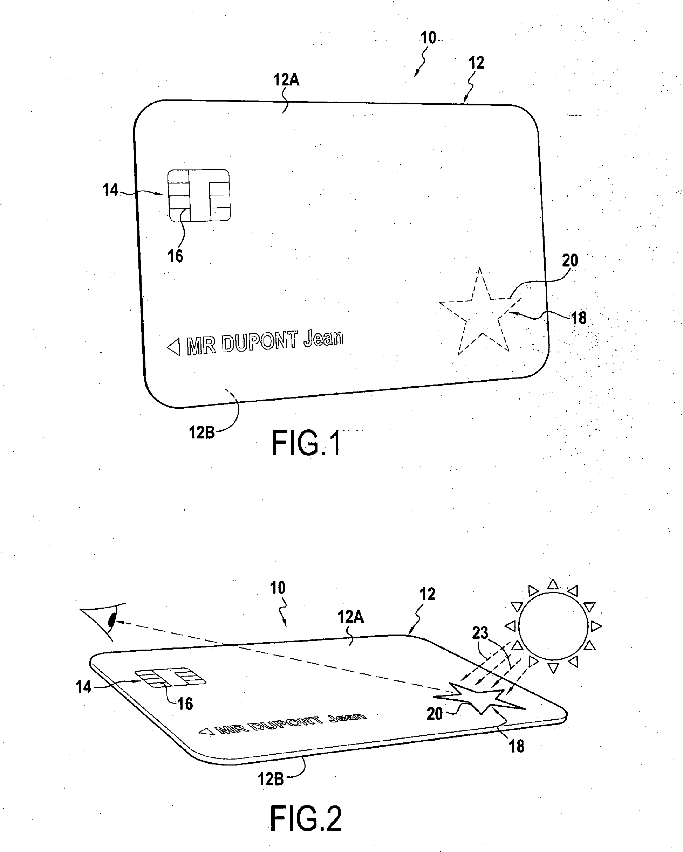

On a représenté sur **la** **figure 1** un article selon un premier mode de réalisation de l'invention. Cet article est désigné par la référence générale 10.

L'article 10 est dans l'exemple décrit une carte à microcircuit, telle qu'une carte bancaire. En variante, l'article 10 peut être un document de sécurité, tel qu'une carte d'identité, une page laminée d'un passeport, etc...

La carte 10 comprend un corps de carte 12 délimitant des première 12A et deuxième 12B faces. Une des faces, la première face 12A, comporte par exemple des données personnelles telles que le nom et le prénom du porteur, ou encore des données d'authentification telles qu'un numéro de carte bancaire, une date de validité, etc.

Dans cet exemple, le corps de carte 12 est réalisé dans un premier matériau défini par un premier coefficient de dilatation thermique C1. De préférence, le premier matériau est une matière plastique.

La matière plastique comprend par exemple essentiellement du polycarbonate (PC). Le premier coefficient de dilatation thermique C1 a par exemple pour valeur 6,5.10⁻⁵ K⁻¹. Dans une variante, le premier matériau peut comprendre essentiellement du polychlorure de vinyle (PVC) ou du PET (polyéthylène téréphtalate).

Dans l'exemple décrit, le corps de carte 12 délimite les dimensions extérieures de la carte 10. De préférence, les dimensions de la carte 10 sont définies par le format ID-1 de la norme ISO 7816 qui est le format classiquement utilisé pour les cartes bancaires. Le corps de carte 12 a ainsi dans cet exemple les dimensions suivantes : 85,60 x 53,98 mm et une épaisseur 0.76 mm. Bien entendu, d'autres formats de cartes peuvent convenir.

Dans l'exemple décrit, la carte 10 est duale. Ainsi, la carte 10 comprend un module à microcircuit 14 muni d'une plage 16 de contacts externes affleurant la surface du corps de carte 12 permettant une communication avec contact au moyen d'un lecteur de carte externe (non représenté). En outre, la carte 10 comprend par exemple une antenne de communication à champ proche (non représentée) reliée électriquement au microcircuit du module à microcircuit et permettant l'établissement d'une communication sans contact avec un lecteur de carte externe (non représenté).

Dans une variante non illustrée, la carte 10 peut être une carte de type sans contact, c'est-à-dire ne permettant qu'une communication sans contact. Dans ce cas, la carte 10 est dépourvue de contacts externes et le module à microcircuit 14 est entièrement incorporé dans le corps de carte 12. Dans une autre variante non encore illustrée, la carte 10 peut être de type avec contact, c'est-à-dire ne permettant qu'une communication avec contact.

La carte 10 comprend en outre une empreinte 18 représentant un motif prédéfini 20. Cette empreinte 18 est formée par une déformation d'une des faces de la carte 10, dans le cas présent, de la première face 12A. Le motif prédéfini 20 a dans l'exemple illustré sur **les** **figures 1 et 2****,** une forme générale d'étoile. En variante, le motif 20 peut avoir une forme géométrique quelconque telle qu'un carré, un losange, un cercle, etc. ou encore une forme représentative d'un objet, d'un logo, d'un pays, etc. Dans un mode de réalisation préféré, le motif 20 représente une donnée complétant les données de sécurité et personnelles.

Pour obtenir cette déformation et ainsi former l'empreinte 18, le corps 12 incorpore une pièce 22 réalisée dans un deuxième matériau, différent du premier, à deuxième coefficient de dilatation thermique C2.

Conformément à l'invention, le premier coefficient de dilatation thermique C1 est plus élevé que le deuxième coefficient de dilatation thermique C2.

De façon plus précise, le premier coefficient C1 est dit élevé par opposition au deuxième coefficient C2 dit faible car le premier coefficient a une valeur supérieure au deuxième coefficient. Ainsi, de préférence, la valeur du premier coefficient C1 est au moins deux fois plus élevée que la valeur du deuxième coefficient C2. Dans l'exemple décrit et de préférence, le premier coefficient C1 a une valeur trois fois plus élevée que celle du deuxième coefficient C2.

Le deuxième matériau est par exemple métallique. Dans l'exemple décrit, le deuxième matériau comprend essentiellement du cuivre qui a pour coefficient de dilatation thermique 1,7.10⁻⁵ K⁻¹. En variante, le deuxième matériau peut comprendre essentiellement du nickel qui a pour coefficient de dilatation thermique 1.3_{.} 10⁻⁵ K⁻¹.

De préférence, la pièce 22 est réalisée dans une masse du deuxième matériau sensiblement homogène. En outre, par exemple, la pièce 22 est dépourvue de fonctions électroniques. La pièce 22 est par exemple électriquement isolée de tout circuit électronique (notamment du microcircuit) incorporé dans la carte 10.

Plus particulièrement, la différence des coefficients C1 et C2 entre les deux matériaux permet de générer une contrainte mécanique lors de la soumission de la carte 10 à des variations thermiques. Cette contrainte mécanique est rendue visible par l'apparition d'une déformation superficielle.

Ainsi, la carte 10 est soumise à une étape de chauffage jusqu'à une température prédéfinie pour provoquer une dilatation des matériaux puis une étape de refroidissement pour provoquer un retrait des matériaux.

De préférence, à la température prédéfinie, le corps 12 est dans un état lui permettant de s'écouler autour de la pièce 22.

Par exemple, la température prédéfinie correspond sensiblement à une température de changement d'état du premier matériau, par exemple une température de transition vitreuse.

En particulier, la pièce 22 est conformée pour que la déformation générée par cette contrainte mécanique corresponde au motif prédéfini 20. De préférence, la pièce 22 a la forme générale du motif prédéfini 20. Ainsi, dans cet exemple, pour obtenir un motif prédéfini 22 en forme d'étoile, la pièce 22 a une forme générale d'étoile.

L'empreinte 18 est de préférence perceptible à l'oeil nu et est apte à être révélée par observation en réflexion. Comme cela est représenté sur la figure 2, le motif prédéfini 20 est observable en réflexion par exemple en dirigeant un faisceau lumineux 23 sur le motif 20.

Il est souhaitable de diriger le faisceau lumineux 23 sur la carte de manière à ce qu'il forme un angle prédéfini avec la face de la carte inférieur à un angle limite de réflexion totale.

Ainsi, de préférence, le faisceau lumineux 23 et le plan de la carte 10 forme un angle prédéfini θ inférieur à un angle limite de réflexion totale.

Par exemple, lorsque le corps 12 est réalisé en polycarbonate ou encore en PVC, l'angle limite de réflexion totale est d'environ 40°. Pour des angles inférieurs à cet angle limite, l'observation en réflexion est optimisée alors qu'au-dessus de cet angle limite, le faisceau lumineux 23 est réfracté à travers le corps 12 de la carte 10.

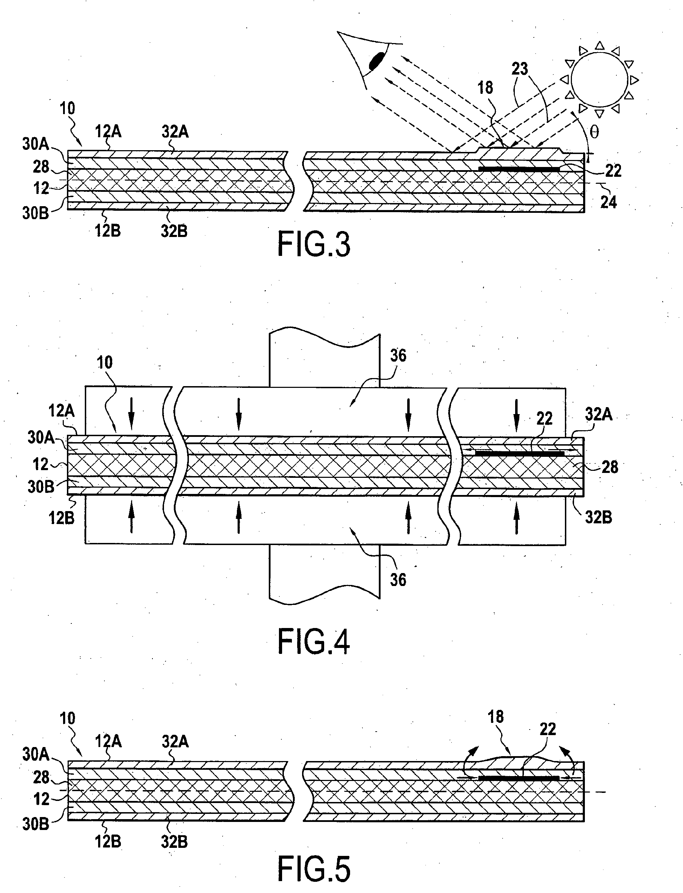

Comme cela est visible sur **la** **figure 3****,** le faisceau lumineux 23 est réfléchi avec un angle prédéfini inférieur à un angle limite de réflexion totale. Au-delà de cette valeur d'angle limite, le faisceau lumineux n'est plus réfléchi mais réfracté à l'intérieur du corps 12 de la carte 10.

Ainsi, du fait de la déformation superficielle de la carte liée à la présence de la pièce, le faisceau lumineux 23 n'est pas réfléchi uniformément dans la direction d'observation et une zone de contraste plus ou moins prononcé apparaît représentant le motif 20.

De préférence, le corps de la carte 12 comprend une nappe 24 de fibres neutres (en pointillé sur **la** **figure 3**) et la pièce 22 est déportée par rapport à cette nappe 24. Par nappe de fibres neutres, on entend au sens de la présente invention, la surface à l'intérieur du corps 12 pour laquelle les contraintes mécaniques s'équilibrent sensiblement.

Dans le mode de réalisation préféré de l'invention, le corps 12 est en forme générale d'une plaque et le premier matériau est sensiblement homogène, la nappe de fibres neutres 24 forme alors un plan localisé sensiblement au centre du corps 12.

Le corps de carte 12 est de préférence formée d'une pluralité de couches. Une telle structure multicouche est mise en forme de préférence par lamination d'une pluralité de couches 26. Ainsi, comme cela est visible sur la figure 3, le corps de carte 12 est formé par une superposition de plusieurs couches laminées entre elles dont l'épaisseur totale est sensiblement de huit cent micromètres.

Ainsi, le corps 12 comprend une couche centrale 28 d'épaisseur de sensiblement trois cent micromètres intercalée entre deux couches intermédiaires 30A, 30B, d'épaisseur sensiblement cent cinquante micromètres, désignées couramment par « inlay », et sur lesquelles des données sont par exemple imprimées. Le corps 12 comprend également deux couches externes 32A, 32B transparentes de protection des données imprimées sur les couches 30A, 30B inlay d'épaisseur cent micromètres. Ces couches externes 32A, 32B sont désignées couramment par « overlay ».

Dans ce mode de réalisation, le plan neutre est localisé sensiblement au milieu de la couche centrale 28. La pièce 22 est alors de préférence disposée au-dessus ou en-dessous de cette couche centrale 28 pour former une déformation sur l'une ou l'autre des faces 12A, 12B du corps de carte 12. Dans l'exemple illustré sur **la** **figure 3**, on voit que la pièce 22 est localisée entre la couche centrale 26 et la couche intermédiaire 28A, en regard de la face 12A du corps de carte 12. Ainsi, la déformation générée est présente essentiellement sur la face 12A du corps de carte 12.

En variante, le corps de carte 12 peut également être formé par moulage ou par toute autre technique appropriée. Par exemple, le corps étant formé par injection de matière dans un moule, au cours de l'étape d'incorporation et avant moulage du corps, on positionne la pièce dans le moule.

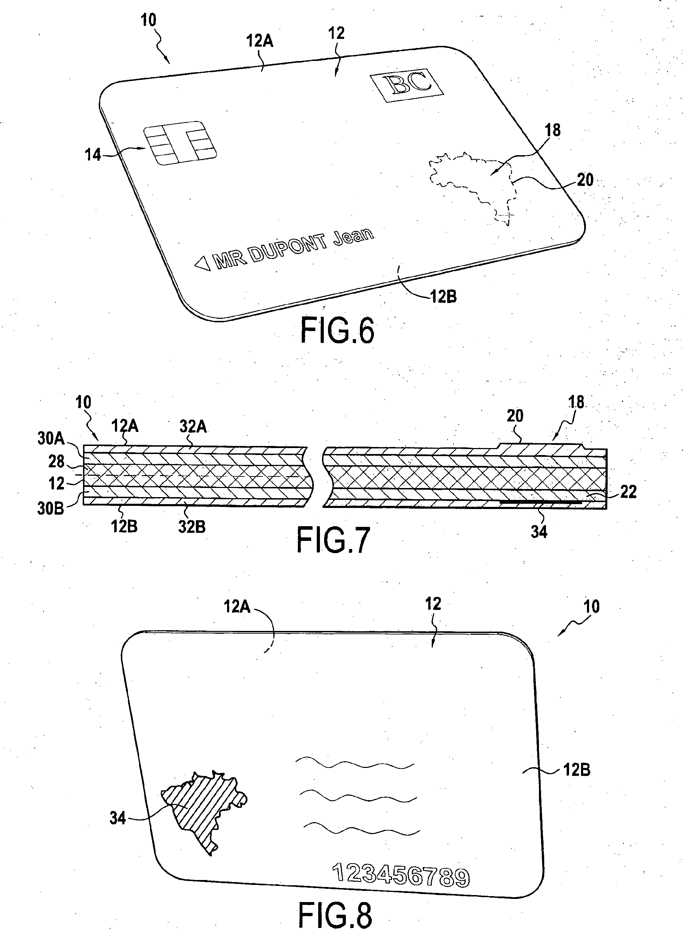

On a représenté sur **les** **figures 6 à 8**, l'article selon un deuxième mode de réalisation. Sur **ces** **figures 6 à 8**, les éléments analogues à ceux des figures précédentes sont désignés par des références identiques.

Dans ce deuxième mode, le deuxième matériau est un vernis. La pièce 22 est par exemple formée par dépôt du deuxième matériau sous forme d'un film 34.

De façon générale, un vernis comprend un agent filmogène incorporé dans un solvant volatile qui s'évapore de manière à ne laisser que le film 34. Par exemple, l'agent filmogène est choisi parmi du polyester du polyacrylate, etc. Le vernis peut être par exemple incolore ou coloré.

De préférence, le vernis incorpore des charges minérales et/ou métalliques conférant au film obtenu un aspect brillant, iridescent, argenté, doré, etc. Par exemple, les charges minérales comprennent de la silice en poudre, ou encore du verre ou des oxydes finement broyés. Les charges métalliques comprennent par exemple des particules de cuivre, d'aluminium, etc.

Comme cela est visible sur **la** **figure 8**, de préférence, la pièce 22 est visible par observation à partir d'une face 12B du corps 12, dite face d'observation, par translucidité d'au moins les couches 26 du corps 12 situées entre cette face 12B et la pièce 22.

Par exemple, le film de vernis 34 est déposé entre la couche dite overlay 32B et la couche imprimée 30B. La couche 32B est ainsi dans cet exemple transparente et le film 34 est visible à travers cette couche 32B. En outre, du fait du faible coefficient de dilatation thermique C2 du deuxième matériau en comparaison avec celui C1 du premier matériau, une déformation est observable sur la face 12A opposée à la face d'observation 12B.

Dans l'exemple illustré sur **les** **figures 6 à 8**, on voit que le motif prédéfini 20 représente la forme générale d'un pays, ici le Brésil. Bien entendu, d'autres formes peuvent convenir notamment des formes représentatives d'un objet, d'un logo et même de données. L'avantage du vernis est qu'il peut être imprimé et donc permettre la formation d'une empreinte avec une relative finesse de détail.

On va maintenant décrire les principales étapes d'un procédé selon l'invention en référence **aux** **figures 4 et 5** pour fabriquer la carte selon le premier mode de réalisation illustré sur **la** **figure 1**.

De préférence, la carte 10 est formée par lamination d'une pile de couches 26. Ainsi, par exemple, au cours d'une première étape, on forme une pile de couches superposées les unes sur les autres. Puis de préférence, pour incorporer la pièce métallique 22, au cours de l'étape d'incorporation, on intercale la pièce 22 entre deux couches du corps 12.

Dans l'exemple décrit, on intercale la pièce métallique 22 entre au moins deux de ces couches 26 et on incorpore éventuellement les autres éléments de sécurité de la carte, tels que par exemple un circuit de communication en champ proche. La localisation de la pièce métallique 22 dans le corps est de préférence déportée par rapport au plan neutre du corps de carte 12 pour accentuer la déformation du corps 12 par dissymétrie des contraintes mécaniques.

En variante, pour fabriquer une carte selon le deuxième mode de réalisation, le deuxième matériau étant un vernis, pour incorporer la pièce 22, on peut déposer le vernis sur une des couches du corps 12.

Puis, on soumet l'ensemble à une troisième étape de chauffage jusqu'à une température prédéfinie.

De préférence et comme cela est illustré sur **la** **figure 4**, cette étape de chauffage correspond également à une étape de lamination et une pression est ainsi exercée simultanément sur le corps de part et d'autre de ses faces pour provoquer le fluage du premier matériau constituant les couches autour de la pièce 22 au moyen d'une presse 36.

Ainsi, la température de chauffage est par exemple comprise entre 100 à 200°C et la pression surfacique exercée au cours de cette étape est comprise entre 50 à 200N/cm² suivant la nature des matériaux. Lors de cette étape, le corps et la pièce se dilatent selon leurs coefficients de dilatation respectifs C1, C2.

Puis au cours d'une quatrième étape, on laisse refroidir la carte 10, par exemple à température ambiante. Du fait que les rétractations des matériaux diffèrent, une contrainte mécanique apparaît dans la carte 10 illustrée de façon schématique par des flèches sur **la** **figure 5** lors de l'étape de refroidissement.

En particulier, au droit de la pièce 22, la contrainte mécanique produit une déformation superficielle. Cette déformation est quasiment imperceptible à l'oeil nu à la lumière du jour en observation frontale de la carte 10 mais peut être révélée aisément par inclinaison de la carte par rapport à un faisceau lumineux généré par exemple par une lampe comme cela est illustré sur **la** **figure 2**.

Eventuellement, un phénomène optique d'interférences peut être observé au niveau de l'empreinte à l'oeil nu et dans des conditions d'observation particulières, notamment en réflexion. Ce phénomène optique comprend des franges d'interférences qui traduisent la photoélasticité du corps de carte 12 et révèlent les contraintes mécaniques internes. Ainsi, la déformation mécanique de la couche supérieure transparente à la lumière visible la rend biréfringente.

Il est bien entendu que les modes de réalisation qui viennent d'être décrits ne présentent aucun caractère limitatif et qu'ils pourront recevoir toute modification désirable sans sortir pour cela du cadre de l'invention. En particulier, le motif prédéfini pourra avoir toute forme souhaitée autre que celles décrites.

Comme expliqué précédemment, la carte 10 peut être authentifiée par observation de l'empreinte à l'oeil nu. En variante, la carte 10 peut être authentifiée par acquisition d'une image de l'empreinte à l'aide d'un dispositif d'acquisition apte à mesurer un relief, par exemple un rugosimètre.

L'image acquise peut alors être affichée et vérifiée par un opérateur qui compare l'empreinte affichée avec l'empreinte attendue. En variante, l'empreinte de l'image acquise est comparée avec une empreinte attendue par un ordinateur.

## Revendications

1. Procédé de réalisation d'une empreinte (18) représentant un motif prédéfini (20) sur un article (10) comprenant un corps (12) étant formé par une pluralité de couches (26, 28, 30A, 30B, 32A, 32B), ledit corps (12) étant réalisé dans un premier matériau à premier coefficient de dilatation thermique (C1), **caractérisé en ce que**, le procédé comprend :
- une étape d'incorporation dans le corps (12) d'une pièce (22) réalisée dans un deuxième matériau à deuxième coefficient de dilatation thermique (C2), inférieur au premier coefficient, la pièce (22) étant intercalée entre deux couches (26, 28, 30A, 30B, 32A, 32B) du corps (12),
- une étape de chauffage de l'article (10) jusqu'à une température prédéfinie pour provoquer une dilatation des matériaux et une étape de lamination durant laquelle une pression est exercée simultanément sur le corps (12) de part et d'autre des faces du corps (12) pour provoquer le fluage du premier matériau constituant les couches (26, 28, 30A, 30B, 32A, 32B) autour de la pièce (22), puis
- une étape de refroidissement de l'article (10) pour provoquer un retrait des matériaux générant une contrainte mécanique à l'origine d'une déformation de l'article (10), la pièce (22) étant conformée pour que la déformation générée corresponde au motif prédéfini (20), ladite empreinte formant un relief.

2. Procédé selon la revendication précédente, dans lequel le premier matériau est essentiellement une matière plastique.

3. Procédé selon l'une ou l'autre des revendications précédentes, dans lequel le deuxième matériau est essentiellement une matière métallique et/ou plastique.

4. Procédé selon l'une quelconque des revendications précédentes, dans lequel, le deuxième matériau est un vernis et la pièce (22) est formée par un film de vernis (34).

5. Procédé selon l'une quelconque des revendications précédentes, dans lequel, à la température prédéfinie, le corps (12) est dans un état lui permettant de s'écouler autour de la pièce (22).

6. Procédé selon l'une quelconque des revendications précédentes, dans lequel la température prédéfinie correspond sensiblement à une température de changement d'état du premier matériau, par exemple une température de transition vitreuse.

7. Procédé selon l'une quelconque des revendications précédentes, dans lequel le corps (12) comprend une nappe (24) de fibres neutres et la pièce (22) est déportée par rapport à cette nappe (24).

8. Procédé selon la revendication précédente, dans lequel le corps (12) est en forme générale d'une plaque et le premier matériau est sensiblement homogène, la nappe de fibres neutres forme un plan localisé sensiblement au centre du corps (12).

9. Procédé selon l'une quelconque des revendications précédentes, dans lequel, le deuxième matériau étant un vernis, pour incorporer la pièce (22), on dépose le vernis sur une des couches du corps (12).

10. Procédé selon l'une quelconque des revendications précédentes, dans lequel lors de l'étape de chauffage, on soumet l'article (10) à une pression prédéfinie afin de provoquer la lamination des couches (26 ; 28, 30A, 30B, 32A, 32B) du corps (12) entre elles

11. Procédé selon l'une quelconque des revendications précédentes, dans lequel la pièce (22) est visible par observation à partir d'au moins une des faces (12A, 12B) du corps (12), par translucidité au moins locale du corps.

12. Procédé selon l'une quelconque des revendications précédentes, dans lequel la pièce (22) a la forme du motif prédéfini (20).

13. Procédé selon l'une quelconque des revendications précédentes, dans lequel le coefficient (C1) du premier matériau est au moins deux fois plus élevé que le coefficient (C2) du deuxième matériau.

14. Procédé selon l'une quelconque des revendications précédentes, dans lequel l'empreinte (18) est perceptible à l'oeil nu et est apte à être révélée par observation en réflexion.

15. Article (10) comprenant un corps (12) muni d'une empreinte (18) formant un relief, **caractérisé en ce que** l'empreinte (18) est réalisée au moyen d'un procédé selon l'une quelconque des revendications précédentes.

## Patentansprüche

1. Verfahren zur Herstellung eines Abdrucks (18), der ein vordefiniertes Motiv (20) aufweist, auf einem Artikel (10), umfassend einen Körper (12), der von einer Vielzahl von Schichten (26, 28, 30A, 32A, 32B) gebildet ist, wobei der Körper (12) aus einem ersten Material mit einem ersten Wärmedehnungskoeffizienten (C1) hergestellt ist, **dadurch gekennzeichnet, dass** das Verfahren umfasst:
- einen Schritt der Eingliederung eines Teils (22), das aus einem zweiten Material mit einem zweiten Wärmedehnungskoeffizienten (C2), der geringer als der erste Koeffizient ist, hergestellt ist, in den Körper (12), wobei das Teil (22) zwischen zwei Schichten (26, 28, 30A, 30B, 32A, 32B) des Körpers (12) angeordnet ist,
- einen Schritt des Erwärmens des Artikels (10) auf eine vordefinierte Temperatur, um eine Dehnung der Materialien hervorzurufen, und einen Laminierschritt, während dessen ein Druck gleichzeitig auf den Körper (12) beiderseits der Flächen des Körpers (12) ausgeübt wird, um ein Fließen des ersten Materials, aus dem die Schichten (26, 28, 30A, 30B, 32A, 32B) bestehen, um das Teil (22) hervorzurufen, dann
- einen Schritt des Abkühlens des Artikels (10), um ein Schrumpfen der Materialien hervorzurufen, das eine mechanische Spannung erzeugt, die zu einer Verformung des Artikels (10) führt, wobei das Teil (22) derart ausgeführt ist, dass die erzeugte Verformung dem vordefinierten Motiv (20) entspricht, wobei der Abdruck ein Relief bildet.

2. Verfahren nach dem vorhergehenden Anspruch, bei dem das erste Material im Wesentlichen ein Kunststoff ist.

3. Verfahren nach dem einen oder dem anderen der vorhergehenden Ansprüche, bei dem das zweite Material im Wesentlichen ein metallisches Material und/oder ein Kunststoff ist.

4. Verfahren nach einem der vorhergehenden Ansprüche, bei dem das zweite Material ein Lack ist und das Teil (22) von einem Lackfilm (34) gebildet ist.

5. Verfahren nach einem der vorhergehenden Ansprüche, bei dem bei der vordefinierten Temperatur der Körper (12) in einem Zustand ist, der es ihm ermöglicht, um das Teil (22) zu fließen.

6. Verfahren nach einem der vorhergehenden Ansprüche, bei dem die vordefinierte Temperatur im Wesentlichen einer Zustandsänderungstemperatur des ersten Materials, beispielsweise einer Glasübergangstemperatur, entspricht.

7. Verfahren nach einem der vorhergehenden Ansprüche, bei dem der Körper (12) eine Neutralfaserschicht (24) umfasst, und das Teil (22) in Bezug zu dieser Schicht (24) versetzt ist.

8. Verfahren nach dem vorhergehenden Anspruch, bei dem der Körper (12) allgemein plattenförmig ist, und das erste Material im Wesentlichen homogen ist, wobei die Neutralfaserschicht eine im Wesentlichen in der Mitte des Körpers (12) lokalisierte Ebene bildet.

9. Verfahren nach einem der vorhergehenden Ansprüche, bei dem, wobei das zweite Material ein Lack ist, für die Eingliederung des Teils (22) der Lack auf einer der Schichten des Körpers (12) aufgetragen wird.

10. Verfahren nach einem der vorhergehenden Ansprüche, bei dem während des Erwärmungsschrittes der Artikel (10) einen vordefinierten Druck ausgesetzt wird, um das Laminieren der Schichten (26; 28, 30A, 30B, 32A, 32B) des Körpers (12) untereinander zu bewirken.

11. Verfahren nach einem der vorhergehenden Ansprüche, bei dem das Teil (22) durch Beobachtung von mindestens einer der Flächen (12A, 12B) des Körpers (12) aus durch zumindest lokale Transluzenz des Körpers sichtbar ist.

12. Verfahren nach einem der vorhergehenden Ansprüche, bei dem das Teil (22) die Form des vordefinierten Motivs (20) hat.

13. Verfahren nach einem der vorhergehenden Ansprüche, bei dem der Koeffizient (C1) des ersten Materials mindestens zweimal größer als der Koeffizient (C2) des zweiten Materials ist.

14. Verfahren nach einem der vorhergehenden Ansprüche, bei dem der Abdruck (18) mit freiem Auge wahrnehmbar und geeignet ist, durch Reflexionsbeobachtung dargelegt zu werden.

15. Artikel (10), umfassend einen Körper (12), der mit einem ein Relief bilden Abdruck (18) versehen ist, **dadurch gekennzeichnet, dass** der Abdruck (18) mit Hilfe eines Verfahrens nach einem der vorhergehenden Ansprüche hergestellt ist.

## Claims

1. Method for creating an imprint (18) representing a predefined pattern (20) on an article (10) comprising a body (12) formed by several layers (26, 28, 30A, 30B, 32A, 32B), said body being made of a first material at a first thermal expansion coefficient (C1), **characterized in that** the method comprises :
a step of incorporation in the body (12) of a piece (22) made from a second material at a second thermal expansion coefficient (C2), less than the first coefficient, the piece (22) being interspersed between two layers (26, 28, 30A, 30B, 32A, 32B) of the body (12),
- a step of heating the article (10) to a predefined temperature to induce expansion of the materials and a lamination step during which a pressure is simultaneously exerted on the body (12) from either side of the faces of the body (12) to induce the first material making up the layers 26, 28, 30A, 30B, 32A, 32B) to flow around piece 22, and then
- a step of cooling the article (10) to induce shrinkage of the materials generating mechanical stress that causes the article (10) to deform, the piece (22) being shaped so that the deformation generated corresponds to the predefined pattern (20), said imprint forming a relief.

2. Method according to the preceding claim, in which the first material is essentially a plastic.

3. Method according to any one of the preceding claims, in which the second material is mainly a metal and/or plastic.

4. Method according to any one of the preceding claims, in which the second material is a glaze and the piece (22) is formed by a glaze film (34).

5. Method according to any one of the preceding claims, in which, at the predefined temperature, the body (12) is in a state that allows it to wind around the piece (22).

6. Method according to any one of the preceding claims, in which the predefined temperature essentially corresponds to a state change temperature for the first material, for example, a glass transition temperature.

7. Method according to any one of the preceding claims, in which the body (12) comprises a neutral fiber sheet (24) and the piece (22) is offset with regard to this sheet (24).

8. Method according to the preceding claim, in which body (12) is of the general shape of a plate and the first material is fairly homogenous; the neutral fiber sheet forms a plane located more or less in the center of the body (12).

9. Method according to any one of the preceding claims, in which the second material being a glaze, in order to incorporate the piece (22) the glaze is deposited on one of the layers of the body (12).

10. Method according to any one of the preceding claims, in which during the heating step, the article (10) is subjected to a predefined pressure in order to induce layers (26; 28, 30A, 30B, 32A, 32B) of body (12) to be laminated together.

11. Method according to any one of the preceding claims, in which the piece (22) is visible by observation from at least one of the faces (12A, 12B) of the body (12), by the at least local translucence of the body.

12. Method according to any one of the preceding claims, in which the piece (22) has the form of the predefined pattern (20).

13. Method according to any one of the preceding claims, in which the coefficient (C1) of the first material is at least twice as high as the coefficient (C2) of the second material.

14. Method according to any one of the preceding claims, in which the imprint (18) is perceptible to the naked eye and can be shown by reflective observation.

15. Article (10) comprising a body (12) provided with an imprint (18) forming a relief, **characterized in that** the imprint (18) is created by means of a method according to any one of the preceding claims.
